Europäisches Patentamt

European Patent Office

Office européen des brevets

(11) Publication number : **0 492 995 A1**

(12) # EUROPEAN PATENT APPLICATION

(21) Application number : **91311815.4**

(22) Date of filing : **19.12.91**

(51) Int. Cl.[5] : **B60J 5/04**

(30) Priority : **19.12.90 US 631099**
**19.06.91 US 717543**

(43) Date of publication of application :
**01.07.92 Bulletin 92/27**

(84) Designated Contracting States :
**AT BE CH DE DK ES FR GB GR IT LI LU NL SE**

(71) Applicant : **BENTELER INDUSTRIES, INC.**
**320 Hall Street SW**
**Grand Rapids, Michigan 48167 (US)**

(72) Inventor : **Horling, Timothy J.**
**18794 Jamestown Circle**
**Northville, Michigan 48167 (US)**
Inventor : **Maloney, Kieran P.**
**2177 Parker Drive**
**Wayland, Michigan 49348 (US)**
Inventor : **DePierre, Robert J.**
**2155 Quail Run Drive**
**Kalamazoo, Michigan 49009 (US)**
Inventor : **Libriani, Alessandro**
**6254 Architrave**
**Grand Rapids, Michigan 49546 (US)**

(74) Representative : **Robinson, Anthony John**
**Metcalf et al**
**Kilburn & Strode 30 John Street**
**London, WC1N 2DD (GB)**

(54) **Spiral taper cut and optimized moment capacity impact beam.**

(57) A vehicle door impact beam (2,12) having an elongated tubular body with a central axis (17), the end portions (32,34) of the beam being taper cut to form inner termini (50,54) and outer termini (52,54) and opposite taper surfaces for each end, the included angle at the inner termini being greater than 180 degrees and the outer termini being less than 180 degrees. The end portion taper surfaces are specially configurated so that the moment capacity at all positions along the length thereof is greater than the bending moment at such positions. The first, and preferably the second taper surfaces spiral from the inner terminus to the outer terminus through an angle of about 90 degrees. Preferably, the inner termini (50,54) of the two ends are on opposite sides of the beam, and the outer termini (52,56) of both ends are on the same side of the beam.

FIG. 4

EP 0 492 995 A1

This invention relates to vehicle door impact beams. Structural reinforcements added to the doors of vehicles are commonly called impact beams, intrusion beams, guard beams, or door beams. Vehicle impact door beams have been provided in a variety of cross sectional configurations, including I-beam, hat section, and tubular. Each of these has effectiveness, if property designed, with the tubular beam considered to have certain advantages, see especially US-A-4,636,608 and US-A-4,708,390. Tapering the ends of the tubular beams has the advantages of 1) accommodating vehicle door curvature, 2) saving material, 3) lowering beam weight, and 4) potentially enabling the beam to be nestable (i.e. the material removed from the end of one beam can form the opposite end of the second beam, etc.).

The basic function of the impact beam is to minimize injury to persons in the vehicle during side collision. Side collision is characterized by an impact load or force applied generally horizontally, transverse to the vehicle door, generally normal to the horizontal beam, thereby applying a bending moment to the impact beam which extends across the door within the confines of the inner and outer door shells. The beam should have moment capacity, at each location along its length, greater than the bending moment caused thereat by the specified impact load.

The length of the taper cut on both ends has in the past been primarily determined by stock length and beam length, in efforts to avoid excess scrap. Performance has been based on door stiffness and strength. Since the greatest moment would be at the centre of the beam, this would be expected to be the point at which yielding first occurs. Door strength tests are conducted with a ram loaded at the beam centre. Determining the length of the cut by stock length and beam length can lead to excessive taper length, and result in a tendency to fail, i.e., buckle, in the taper itself rather than in the main central portion of the beam. It has now been found that in some portions of prior taper cuts, the moment capacity $M_C$ dips below the bending moment $M_B$ so that the moment ratio $M_R$ is less than one. One way to attempt to prevent this is to make the taper cut considerably shorter. However, this can result in structures having a large excess of capacity at parts of the taper cuts. This excess capacity results in use of additional costly material, with resultant added weight. It has been concluded that what is needed is a taper cut with moment capacity in all portions greater than the bending moment, yet eliminating excess capacity. This will streamline the beam and also save on material costs. In other words, it would be desirable to be able to provide an improved version of the basic tubular beam configuration set forth in the prior art wherein there is adequate but not excessive strength in the taper cuts, and also being nestable.

The ability to increase the moment of inertia, thus increasing the moment capacity of the beam, without increasing beam weight, or preferably even with a decreased beam weight, would be particularly advantageous.

When the end portions of tubular beams are provided with a taper cut, the ends have only a fraction of the tube remaining there, i.e., a relatively small included angle with portions having an included angle of less than 180 degrees, and other portions having an included angle greater than 180 degrees. The "included angle" is that angle between two lines extending from the centre line of the tubular beam to the taper edges on opposite sides of the centre line, to indicate the degree of peripheral wall remaining.

If such a tapered beam structure is "edge loaded" relative to the remaining peripheral wall, i.e., has the impact force applied in a manner depicted in Fig. 10, the tube portion theoretically has a greater moment of inertia, i.e., $I_x = 0.5I_F$, where $I_x$ is the moment of inertia at that point, and $I_F$ is the moment of inertia assuming the tube to be a full tube for included angles equal to 180 degrees. However, when a centrally located force is applied to the tubing structure, the reactive force at the tapered section is offset from the applied force causing a couple and hence twisting or torqueing the tapered section, which may cause buckling. Therefore, prior taper cut beams, as in US-A-4,636,608 and US-A-4,708,390, have been mounted so that the impact force will be face applied relative to the end portions, as depicted in Fig. 13, thereby creating no torque on these end sections. However, the moment of inertia of these end portions is much less when face loaded, i.e., $I_x = 0.095\ I_F$ for an included angle of 180 degrees.

When the included angle of the end portion is 180 degrees or greater, it is preferable to have the impact force applied in edge loading fashion (see Fig. 10), rather than face loading as in Fig. 13, because the moment of inertia is much greater as explained above, and moreover the force does not create an off centre torque.

One feature of the present invention, therefore, is to provide a nestable, tubular, impact door beam for a vehicle, having tapered ends of special configuration effecting near optimum moment capacity combined with less material cost. The moment capacity at any incremental part of the beam, even along the taper cut ends, is assured to be greater than the bending moment, but not greatly in excess of the bending moment so as to waste material. The moment capacity is controlled in a fashion that the novel beam still has the nestability advantage of prior tubular beams, i.e., two beam ends formed with one cut. The length of the cut, however, can be increased while still providing an effective door beam with adequate moment capacity.

The objects of the invention are achieved, according to one aspect of the invention, by the beam having means comprising a predetermined partial circumference with an included angle sufficient at all positions along the length of the tapered end portions for achieving a moment capacity (Mc), at all said positions, greater than the bending moment (Mb) at said positions; each said tapered end portion having a sloped central body and a pair of parabolic, body straddling transitions, one toward said outer terminus and the other toward said central portion; said wall surfaces of said one parabolic transition having a convex curvilinear parabolic configuration, and said wall surfaces of said other parabolic transition having a concave curvilinear parabolic configuration.

According to another aspect of the invention, the taper surfaces said taper surfaces in said first end portion both extend spirally from said inner terminus in said first end portion through an angle of about 90 degrees to said outer terminus of said first end portion; and said taper surfaces in said second end portion both extend spirally from said inner terminus in said second end portion through an angle of about 90 degrees to said outer terminus of said second end portion.

In a preferred embodiment, each taper cut includes a sloped central body and a pair of curvilinear, parabolic end transitions. The included angle of the central body is generally defined as:

$$IA = X/TL (L) + Y$$

Where IA = included angle at a particular location
   X = slope times total taper length
   TL = total taper length
   L = fraction of total taper length
   Y = the Y axis intercept of the body slope.

The included angle of the central body is preferably defined as:

$$IA = 150/TL (L) + 105.$$
$$\text{for } 0.2\ TL \geq L \geq 0.8\ TL$$

The included angle of one end transition is generally defined by:

$$IA = Z/TL \sqrt{TL/V} (\sqrt{L}) + W$$

Where Z = parabola shape
   V = number of segments in the total taper length
   W = parabola intercept with Y axis;

The included angle of this one end transition is preferably defined by:

$$IA = 495/TL \sqrt{(TL/5)} \sqrt{L} + 36$$
$$\text{for } 0 \leq L \leq 0.2\ TL$$

The included angle of the other end transition is generally defined by:

$$IA = 360 - [Z/TL ( \sqrt{TL/V} ) \sqrt{(TL-L)} + W]$$

and is preferably defined by:

$$IA = 360 - [495/TL \sqrt{(TL/5)} \sqrt{(TL-L)} + 36]$$
$$\text{for } 0.8\ TL \leq L \leq TL$$

The present invention also provides a vehicle door impact beam of the tapered end type, having novel structure achieving increased moment capacity allowing use of less beam material with longer tapered end portions. Preferably, the taper surfaces spiral about the central axis of the tube, increasing the moment of inertia in the plane perpendicular to the applied load. The structure enables longer taper cuts to be employed while maintaining adequate moment of inertia, thereby reducing weight and the amount of material required. Yet, it has ease of manufacture. The spiral on each end portion extends through a total spiral angle of about 90°. The beam ends preferably fit within concave recesses in the brackets, sometimes called extensions, when they are welded in place.

The outer half of the end portions having an included angle less than 180 degrees, when mounted to extensions, are oriented so that the force is basically face applied, while the inner half of the end portions having an included angle greater than 180 degrees, when mounted, are oriented so that the force is basically edge applied. Hence, torque on the intermediate segments of each tapered end portion is minimized.

Each tapered end has an inner terminus and an outer terminus. The inner termini of the two ends are 180 degrees displaced from each other. The outer termini of the two ends are on the same side of the beam, i.e., displaced zero degrees from each other.

The invention may be carried into practice in various ways but a number of vehicle door impact beams will now be described by way of example with reference to the accompanying drawings, in which:

Fig. 1 is a fragmentary side elevational view of a tubular nestable impact door beam of the first embodiment of the invention, showing particularly the end portions;

Fig. 1A is a view taken on plane A-A of Fig. 1;

Fig. 1B is a sectional view taken on plane B-B of Fig. 1;

Fig. 1C is a sectional view taken on plane C-C of Fig. 1;

Fig. 1D is a sectional view taken on plane D-D of Fig. 1;

Fig. 2 is a graphical representation of the relationship of beam length versus moment capacity in comparison to bending moment of a near optimum taper cut;

Fig. 3 is a graphic display of taper length versus included angle, showing the mathematical relationship of an optimum taper cut;

Fig. 4 is a side elevational view of a vehicle door impact beam and mount assembly according to the second embodiment of this invention;

Fig. 5 is a top plan view of the assembly in Fig. 4, with the mounting brackets shown in section;

Fig. 6 is a fragmentary, enlarged, side elevational view of the left end of the beam and mount assembly in Fig. 4;

Fig. 7 is a fragmentary, enlarged, side elevational view of the right end of the beam and mount assembly in Fig. 4;

Fig. 8 is a fragmentary, enlarged, top plan view of the left portion of the assembly in Fig. 5;

Fig. 9 is a fragmentary, enlarged, top plan view of the right end portion of the assembly in Fig. 5;

Fig. 10 is a sectional diagrammatic view of an outer part of an end portion of the impact beam, showing the force (theoretically) being "edge" applied;

Fig. 11 is a diagrammatic view of an outer end portion like that in Fig. 10, taken on plane XI-XI of Fig. 6, with a small included angle less than 180 degrees, showing the force being substantially "face" applied;

Fig. 12 is a diagrammatic view of an inner part of an end portion of the impact beam, taken on plane XII-XII of Fig. 6, having an included angle greater than 180 degrees, showing the impact force being "edge" applied; and

Fig. 13 is a diagrammatic sectional view of the inner end portion in Fig. 12, showing the impact force being face applied.

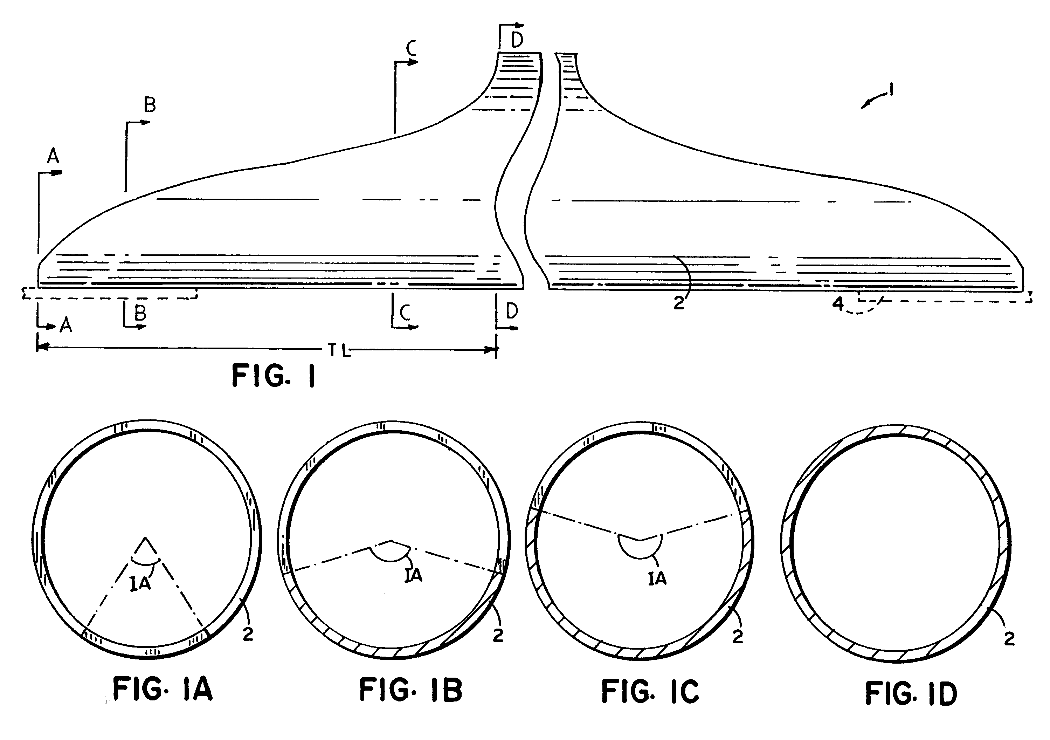

Referring now specifically to the first embodiment in Figs. 1-3 of the drawings, the impact beam assembly 1 there depicted typically includes the impact beam 2 itself and a pair of mounting plates 4, shown in phantom, to which the beam is secured as by welding, the mounting plates being secured to the door frame of the vehicle by welding, bolts, or the like, as is desired. Beam 2 is initially of a tubular cylindrical body of high grade steel, e.g., "BTR 110" from Benteler Werke AG, Paderhorn, Federal Republic of Germany. It may be formed as set forth in US-A-4,210,467. The tubular beam has a central axis and a wall thickness. Beam 2 also has specially formed and configured taper cut end portions.

The end extensions or mounting brackets 4 may vary considerably in configuration, depending upon the vehicle model and size into which the structure is to be mounted. These brackets may have stamped recess cavities for receiving the ends of the beam, and appropriate orifices or fasteners to secure them to the door frame. Typical brackets are shown in US-A-Patent 4,708,390, as one example.

The tapered end portions of the beam may be formed by being laser cut while causing relative rotation between the beam and the laser and relative axial movement between the beam and the laser, the laser preferably being oriented directly toward the axis of the beam. A suitable laser source (not shown) can be a 1250 watt carbon dioxide cutting laser, with the laser beam being directed toward the axis of the tubular workpiece by being reflected by mirrors, as explained in U.S. Patent 4,708,390.

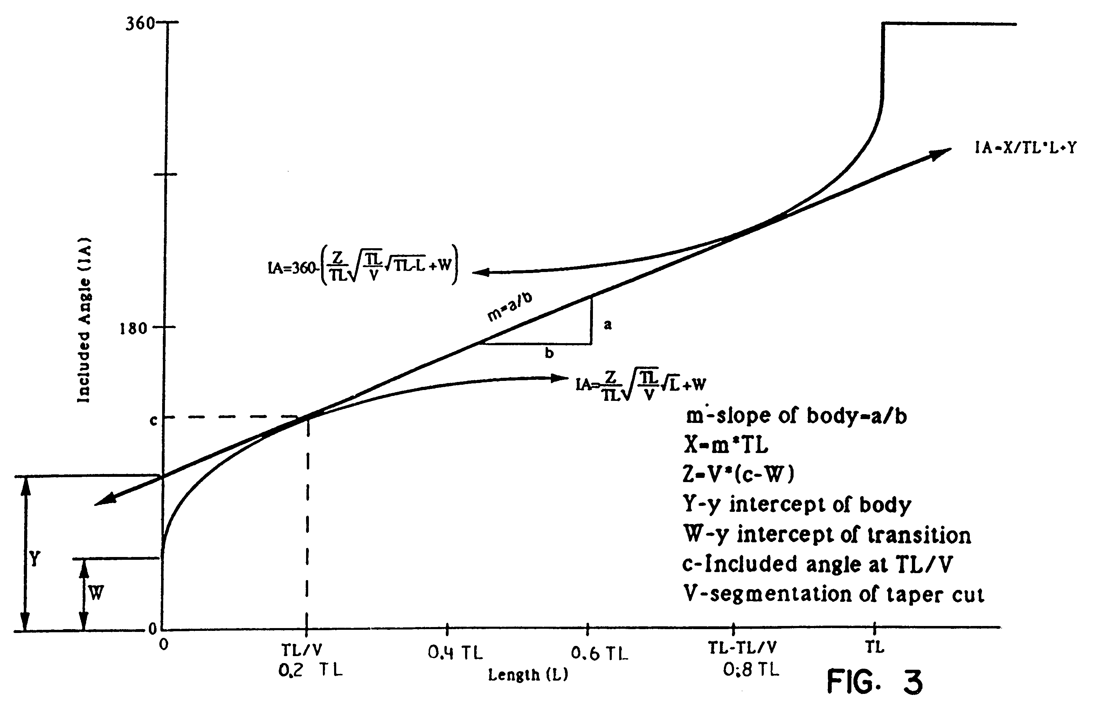

The present development involves a special relationship such that the moment capacity is greater than the bending moment over the length of the taper cut, to prevent buckling at the taper cut, but not excessively greater, and also allowing the beam to be nestable, i.e., one cut simultaneously forming two ends of two separate beams. Three zones are formed in each taper cut end portion, each according to a particular mathematical relationship. More specifically, each taper cut end portion includes a central, sloped cut body and a pair of end transitions (Fig. 3). One of the end transitions adjacent the central portion of the beam is concavely curved while the other end transition adjacent the outer terminus is convexly curved. In achieving these cuts, the metal tube is cut to cause the wall thickness of the tube to be exposed. Each portion of the exposed wall surface is preferably oriented toward, or almost toward, the axis of the cylindrical tube.

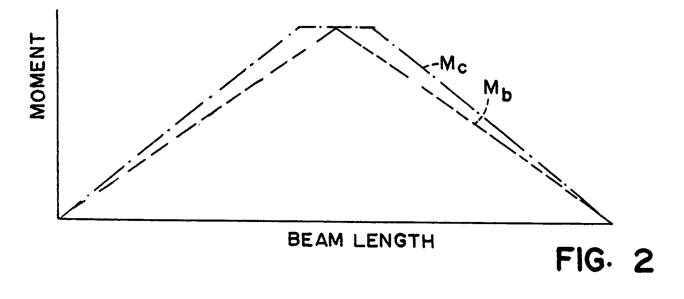

The fragmentary distance along the total cut length TL, at which an evaluation is to be made, is designated L. In the illustrated embodiment, the total taper length TL is divided into fifths, i.e., 0.2 TL lengths. Other fractions could be employed. The total taper length TL is the linear length of the tube over which the cut extends. At any incremental length L along the length TL of the taper cut, there is an included angle (IA) between the two mirror image opposite sides of the cut (see Figs 1A - 1D). The taper cut has an outer terminus at the end of the beam, and an inner terminus adjacent the central portion of the beam. The beam has a greater peripheral partial circumference adjacent this central portion, and a smaller peripheral partial circumference adjacent the outer terminus. To achieve adequate moment capacity in all portions of the impact beam, including the taper cut end portions, it is important to have the moment capacity $M_C$ at each increment along the length of the beam greater than the bending moment $M_B$ (Fig. 2) so that impact will cause the beam to buckle at the centre of the beam rather than at the taper cut end portions. Thus, as depicted in Fig. 2, the moment capacity $M_C$ is greater at all points along the beam than the bending moment $M_B$, i.e., the moment ratio $M_R$ of $M_C$ divided by $M_B$ is equal to or greater than one. It is also important to have the beam be nestable, i.e., two beam ends cut with the same taper cut. The included angle should not be greater than a certain amount if nestable character is to be achieved. This is achieved using special relationships for the configuration of the body portion and the two transition portions of each taper cut, these being defined in terms of the included angle IA as set forth below. The slope of the body portion is linear, or close thereto. The two transitions are parabolic, or close thereto.

The included angle of this body portion is generally defined by:

$$IA = X/TL (L) + Y$$

Where IA = included angle at a particular location

X = slope times total taper length

TL = total taper length

L = fraction of total taper length at the particular location

Y = the Y axis intercept of the body slope.

The included angle of the central body is preferably defined as:

$$IA = 150/TL\ (L)\ +\ 105;$$

for $0.2\ TL \geqq L \geqq 0.8\ TL$

The included angle of one end transition is generally defined by:

$$IA = Z/TL\ \sqrt{TL/V}\ (\sqrt{L}\ )\ +\ W$$

Where Z = parabola shape

V = number of segments in the total taper length

W = parabola intercept with Y axis.

The included angle of this one end transition is preferably defined by:

$$IA = 495/TL\ \sqrt{(TL/5)}\ \sqrt{L}\ +\ 36$$

for $0 \leqq L \leqq 0.2\ TL$

The included angle of the other end transition is generally defined by:

$$IA = 360 - [Z/TL\ (\ \sqrt{TL/V}\ )\ \sqrt{(TL-L)}\ +\ W]$$ and

is preferably defined by:

$$IA = 360 - [495/TL\ \sqrt{(TL/5)}\ \sqrt{(TL-L)}\ +\ 36]$$

for $0.8\ TL \leqq L \leqq TL$

The resulting tubular beam is at or near optimum beam capacity over its length, including its taper cut ends, and is nestable.

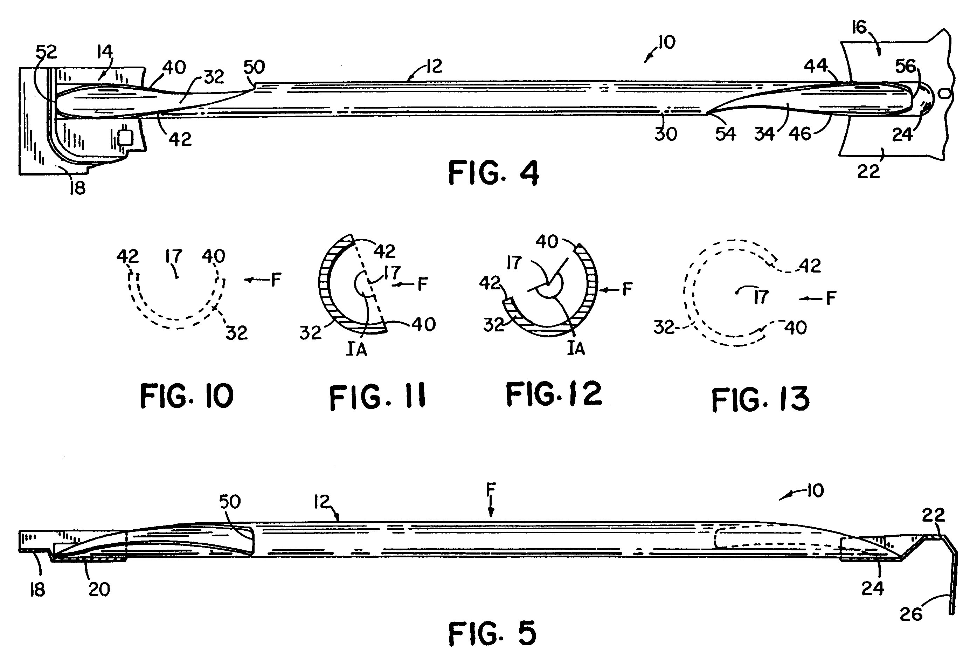

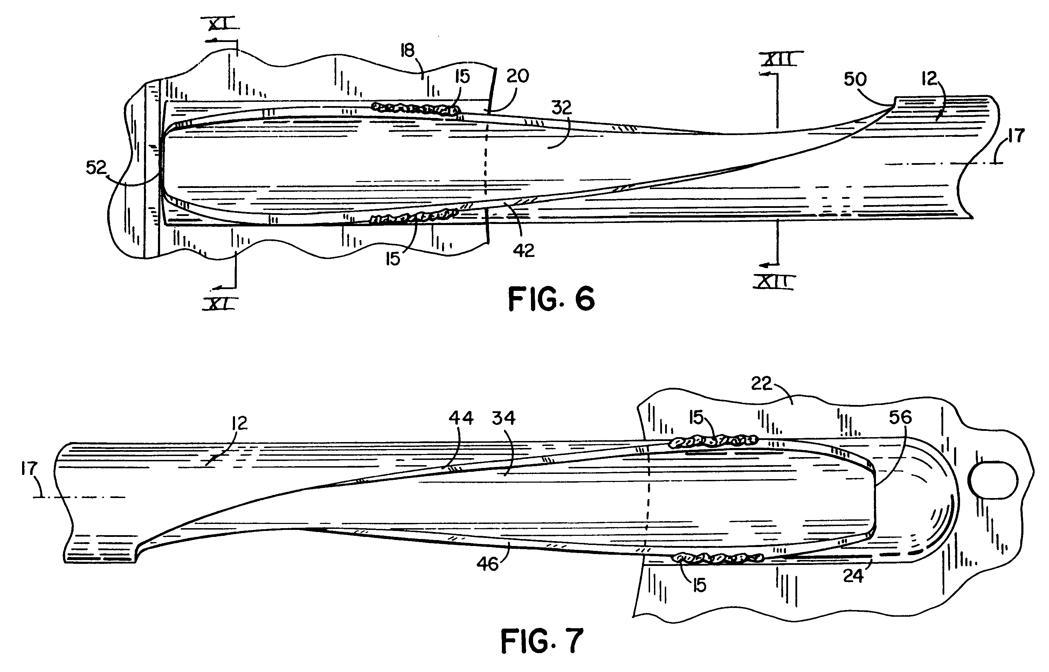

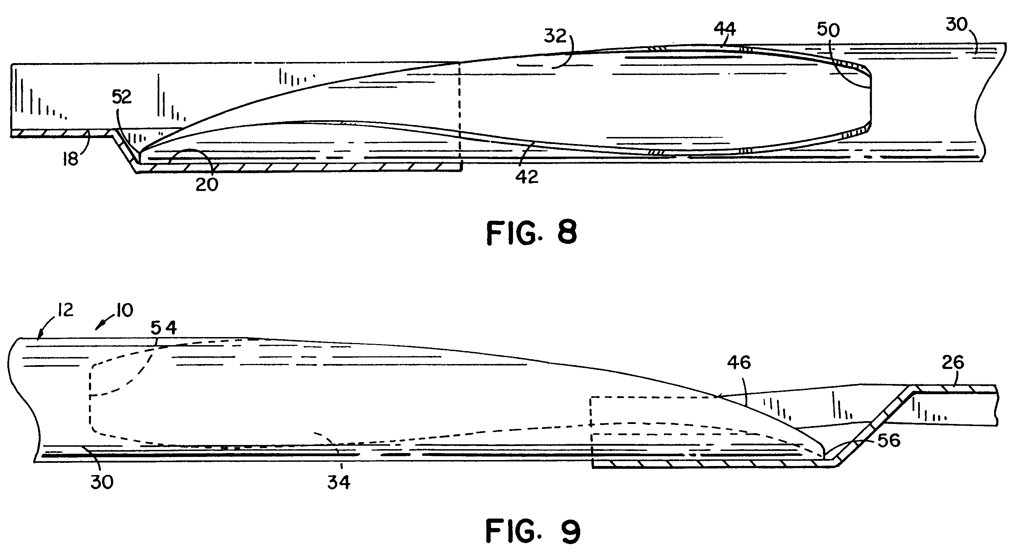

Referring now specifically to the second embodiment in Figs. 3-13 of the drawings, the vehicle impact beam and mount assembly 10 (Figs. 4 and 5) comprises an elongated, taper cut, tubular impact beam 12, and first and second mounts, brackets or extensions 14 and 16. These mounts may be of varied configuration to accommodate the particular make, size and model of the vehicle, i.e., automobile or truck, involved. Mounts 14 and 16 are typical of those employed. Mount 14 is shown to include a generally planar portion 18 having an elongated, concave, curvilinear, semicylindrical recess 20 therein, of an inner diameter generally corresponding to the outer diameter of beam 12. Mount 16 likewise has a generally planar portion 22 and an elongated, concave, curvilinear, semicylindrical cavity 24 for receiving the beam end. Bracket 16 is also shown with a transverse flange 26 (Fig. 2) for fitting a particular door style. These mounts are secured to the door frame by bolting or welding. Elongated cavity 24 also has an inner diameter generally comparable to the outer diameter of beam 12 for receiving the beam end. The beam ends are welded to brackets 14 and 16 at zones 15 (Figs. 3 and 4).

The impact beam comprises an elongated, tubular member, generally cylindrical in configuration, having a central portion 30, a first end portion 32, and a second opposite end portion 34. It is preferably made of steel such as that in US-A-4,210,467, commonly called BTR 110. The peripheral wall of each of these end portions is taper cut along the length of the end portion in a manner to expose a pair of opposite taper surfaces, specifically taper surfaces 40 and 42 on end portion 32 and taper surfaces 44 and 46 on end portion 34. Each taper surface extends through the thickness of the wall. They are on both sides of the central axis of the tube, to provide the first and second taper surfaces on opposite sides of and equally spaced from the central axis of the beam. The two surfaces of each pair of taper surfaces join each other at the inner and outer termini of the cut. These taper surfaces preferably are aligned throughout their length with the central axis of the beam such that, at each increment along the taper surface length, a plane passing through that increment will also pass through the central axis of the beam. The taper cut on end portion 32 has an inner axial terminus 50 and an outer axial terminus 52. The taper cut on end portion 34 has an inner axial terminus 54 and an outer axial terminus 56.

Both taper surfaces on each end portion thus extend spirally between the inner terminus and the outer terminus thereof. As depicted, each inner terminus is an arc in a plane transverse to, and preferably normal to, the beam axis. Each outer terminus is an arc in a plane transverse to, and preferably normal to, the beam axis. The spiral in each end portion, between the inner and outer termini, optimally extends through an angle of about 90 degrees. One portion, here the first end portion 32, has the inner terminus on the top of the beam, with the spiral extending counterclockwise. End portion 34 has the inner terminus on the opposite side of the beam, i.e., here the bottom of the beam, displaced 180 degrees from the inner terminus on the first end portion. The spiral on depicted end portion 34 also extends counterclockwise, i.e., the two opposite tapered end portions spiral in the same angular direction.

Each tapered end portion has an outer part, i.e., nearer the outer terminus, having an included angle less than 180 degrees, and an inner part, i.e., nearer the inner terminus, having an included angle greater than 180 degrees. The outer part is prone to be unstable if impact force is edge applied as in Fig. 10, due to torque-caused buckling, but is stable when impact force is substantially face applied as in Fig. 11. This outer part is provided with additional moment capacity by the attached mounting plate or extension 14 or 16. The spiral configuration of the tapered end causes the impact force to be fully face applied at the outer terminus, and fully edge applied at the inner terminus, with a gradual shift between the two over the length of the taper cut. Generally midway between the termini, some torque results from impact force, but it is relatively small.

The respective taper cuts are preferably formed utilizing a conventional cutting laser beam oriented toward the centre line axis 17 of impact beam 12 while the impact beam is rotationally and axially advanced relative to the laser beam to sequentially cut one side, the inner terminus, and then the other side. When one end is taper cut, automatically the opposite end of the next beam is simultaneously formed, i.e., the two beams are nestable. A suitable cutting source (not shown) can be a 1250 watt conventional carbon dioxide cutting laser or the equivalent.

It has been determined by calculation and through experimentation that this uniquely configured, tubular, tapered end beam is capable of providing increased moment capacity under impact force. This allows the tapered portions to be made longer than those of predecessor beams, while still achieving proper moment capacity at any segment of the end portion, i.e., greater than the bending moment at that segment. Thus, this longer taper achieves adequate strength to satisfy the impact requirements of governmental standards while saving considerable material and weight, and enabling fit inside thin and/or curvilinear doors more readily. The fact that the beam can be made lighter in weight not only saves beam material, but also decreases vehicle weight for better economy of fuel usage. Yet, the beam is nestable, i.e., the material removed from one end of the beam during manufacture actually forms the opposite end, i.e., second end, of the next beam being formed.

Again, the fragmentary distance along the total cut length TL of either the first end portion 32 or the second end portion 34, at which an evaluation is to be made, is designated L. In the illustrated embodiment, the total taper length TL is divided into fifths, i.e., 0.2 TL lengths. Other fractions could be employed. The total taper length TL is the linear length of the tube over which the cut extends. At any incremental length L along the total length TL of the taper cut, there is an included angle (IA) of the material remaining between the two mirror image opposite sides of the cut (see e.g., Figs. 11 and 12). These relationships can be graphically seen from Fig. 3. The beam has a greater peripheral, partial circumference adjacent the central beam portion, and a smaller peripheral partial circumference adjacent the outer terminus of the taper cut. To achieve desired moment capacity in all increments of the impact beam, including along the taper cut end portions, the moment capacity $M_C$ at each increment along the length of the beam is made greater than the bending moment $M_B$ (Fig.52) so that impact will cause the beam to hinge near the centre of the beam rather than at the taper cut end portions. The included angle should not be excessive.

Again, each taper cut end portion has a central body and two body straddling transitions. There is a relationship between the configuration of the central body and the two transitions of each taper cut, these being defined in terms of the included angle IA as set forth below. Generally, the shape of the central body is a linear slope, or close thereto, in a spiral, i.e., helix, while each of the two transitions is of parabolic curvature, or close thereto, in a spiral, i.e., helix.

As in the first embodiment, the included angle of the central body is generally defined by:

$$IA = X/TL\ (L) + Y$$

Where IA = included angle at a particular location

m = slope of central body taper surface

X = slope of the taper surface times total taper length = m(TL)

TL = total taper length

L = the fraction of total taper length at a particular location

Y = the Y axis intercept of the body slope. The preferred included angle of the central body is defined as:

$$IA = 150/TL\ (L) + 105;$$

for $0.2\ TL \geqq L \geqq 0.8\ TL$

The included angle of the outer end transition is generally defined by:

$$IA = Z/TL\ \sqrt{TL/V}\ (\sqrt{L}) + W$$

Where Z = parabola shape = (V)(c-W)

V = number of segments in the total taper length

W = parabola intercept with Y axis

c = included angle at TL/V

m = slope of central body taper surface. The preferred included angle of the outer end transition is defined by:

$$IA = 495/TL\ \sqrt{(TL/5)}\ \sqrt{L} + 36$$

for $0 \leqq L \leqq 0.2\ TL$

The included angle of the inner end transition is generally defined by:

$$IA = 360 - [Z/TL\ (\sqrt{TL/V})\ \sqrt{(TL-L)} + W]$$

The preferred included angle is defined by:

$$IA = 360 - [495/TL\ \sqrt{(TL/5)}\ (TL-L) + 36]$$

for $0.8\ TL \leqq L \leqq TL$

These relationships are based on the spiral taper surfaces being theoretically projected to a non-spiral condition.

It will be appreciated that the beam details could be modified somewhat to fit particular circumstances or style of vehicle, without departing from the concept embodied.

**Claims**

1. A vehicle door impact beam (2,12) comprising: an elongated tubular body having a wall thickness, and comprising a central portion (30), and two end portions (32,34); each said end portion of the body being taper cut along its length in a manner to cause said wall thickness to be exposed to form a pair of mirror image wall edge surfaces (40,42;44,46); each said end portion having an outer terminus (52,56) and having a greater peripheral partial circumference with an included angle greater than 180 degrees adjacent said central portion (30) and a smaller peripheral partial circumference with an included angle less than 180 degrees adjacent said terminus, the beam having means comprising a predetermined partial circumference with an included angle sufficient at all positions along the length of the tapered end portions for achieving a moment capacity (Mc), at all said positions, greater than the bending moment (Mb) at said positions; each said tapered end portion having a sloped central body and a pair of parabolic, body straddling transitions, one toward said outer terminus and the other toward said central portion; said wall surfaces of said one parabolic transition having a convex curvilinear parabolic configuration, and said wall surfaces of said other parabolic transition having a concave curvilinear parabolic configuration.

2. A vehicle door impact beam comprising: an elongated tubular member having a central axis, a peripheral wall, and a pair of ends, and comprising a central portion (30) and first and second end portions (32,34); said peripheral wall of each of said end portions being taper cut along the length thereof through the thickness of said wall on both sides of said central axis in a manner to thereby provide first and second taper surfaces (420,42;44,46) on opposite sides of said central axis; said taper surfaces of each of said first and second end portions having an outer axial terminus (52,56) at the respective outer end of said beam, and having an inner axial terminus (50,54) spaced from said respective outer end of said beam; the included angle of said wall between said first and second taper surfaces varying from greater than 180 degrees near said inner terminus to less than 180 degrees near said outer terminus, said taper surfaces (40,42) in said first end portion both extending spirally from said inner terminus (50) in said first end portion through an angle of about 90 degrees to said outer terminus of said first end portion; and said taper surfaces (44,46) in said second end portion both extending spirally from said inner terminus (54) in said second end portion through an angle of about 90 degrees to said outer terminus of said second end portion.

3. A vehicle door impact beam according to claim 2 characterized in that said taper surfaces of both said first and second end portions spiral in the same angular direction.

4. A vehicle door impact beam according to any of claims 1 to 3 characterized in that said central body is characterized by the equation:
$$IA = (150/TL)(L) + 105$$
for $0.2\,TL \leqq L \leqq 0.8\,TL$
where IA = included angle (degrees)
TL = taper length
L = fraction of total taper length.

5. A vehicle door impact beam according to claim 4 characterized in that one said end transition is characterized by the equation:
$$IA = 495/TL\sqrt{(TL/5)}\ \sqrt{L} + 36$$
for $0 \leqq L \leqq 0.2\,TL$
and the other end transition is characterized by the equation:
$$IA = 360 - [495/TL(\sqrt{TL/5})\ \sqrt{(TL-L)} + 36]$$
for $0.8\,TL \leqq L \leqq TL$

6. A vehicle door impact beam according to any of claims 1 to 3 characterized in that said body is characterized as follows:
$$IA = X/TL(L) + Y$$
where IA = included angle
X = incline of said body
TL = total length of taper cut
L = the fractional length along the total taper cut
Y = Y axis intercept of the body.

7. A vehicle door impact beam according to claim 6 characterized in that said one parabolic curve transition is characterized as follows:
$$IA = Z/TL(\sqrt{TL/V})(\sqrt{L}) + W$$
and said other parabolic curve transition is characterized as follows:
$$IA = 360 - [Z/TL(\sqrt{TL/V})\ \sqrt{(TL-L)} + W]$$
where
Z = parabola shape
W = Y intercept of parabola.

8. A vehicle door impact beam according to any of claims 1 to 7 characterized in that said one transition and said other transition are of like parabolic curves.

9. A vehicle door impact beam according to any of claims 1 to 8 characterized in that both said inner terminus and said outer terminus of each of said first and second end portions comprise an arcuate surface extending through an angle less than 180 degrees.

10. A vehicle door impact beam according to any of claims 1 to 9 characterized in that said inner termini (50,54) of said first and second end portions are on opposite sides of said beam, 180 degrees from each other.

11. A vehicle door impact beam according to any of claims 1 to 10 characterized in that said outer termini (50,56) of said first and second end portions are on the same side of said beam.

12. A vehicle door impact beam according to any of claims 1 to 11 characterized in that the segmental increments along each of said first and second taper surfaces, and on opposite sides of said axis, are at like angles relative to said axis.

13. A vehicle door impact beam according to any of claims 1 to 12 characterized in that segmental increments along each of said first and second taper surfaces of each of said first and second end portions are radially oriented in alignment with said central axis.

14. A vehicle door impact beam comprising: an elongated tubular member having a central axis, a peripheral wall, and a pair of ends, and comprising a central portion and first and second end portions; said peripheral wall of at least said first end portion being taper cut along the length thereof through the thickness of said wall on both sides of said central axis in a manner to thereby provide first and second taper surfaces on opposite sides of said central axis; said taper surfaces of at least said first end portion having an outer axial terminus at the respective outer end of said beam, and having an inner axial terminus spaced from said respective outer end of said beam; the included angle of said wall between said first and second taper surfaces varying from greater than 180 degrees near said inner terminus to less than 180 degrees near said outer terminus, said taper surfaces of said first end portion both extending spirally from said inner terminus in said first end portion through an angle to said outer terminus of said first end portion.

FIG. 1

FIG. 1A     FIG. 1B     FIG. 1C     FIG. 1D

EP 0 492 995 A1

FIG. 2

FIG. 3

$IA = X/TL \cdot L + Y$

$IA = 360 - \left( \dfrac{Z}{TL} \sqrt{\dfrac{TL}{V}} \sqrt{TL \cdot L} + W \right)$

$IA = \dfrac{Z}{TL} \sqrt{\dfrac{TL}{V}} \sqrt{L} + W$

$m = a/b$

m-slope of body=a/b
X=m*TL
Z=V*(c-W)
Y-y intercept of body
W-y intercept of transition
c-Included angle at TL/V
V-segmentation of taper cut

Included Angle (IA)

360

180

Length (L)

TL/V
0.2 TL

0.4 TL

0.6 TL

TL-TL/V
0.8 TL

TL

EP 0 492 995 A1

FIG. 4

FIG. 10

FIG. II

FIG.12

FIG. 13

FIG. 5

EP 0 492 995 A1

FIG. 6

FIG. 7

FIG. 8

FIG. 9

EP 0 492 995 A1

| | European Patent Office | EUROPEAN SEARCH REPORT | Application Number |
|---|---|---|---|
| | | | EP 91 31 1815 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 235 091 (SCHWEIZERISCHE ALUMINIUM) * column 4, line 22 - line 40; figure 4 * | 1 | B60J5/04 |
| A | EP-A-0 395 621 (AUSTIA METALL AKTIENGESELLSCHAFT ) * abstract; figure 1 * | 1 | |
| A | DE-A-3 709 489 (ALUMINIUM WALZWERKE SINGEN) * column 4, line 29 - line 45; figure 5 * | 1 | |
| | | | TECHNICAL FIELDS SEARCHED (Int. Cl.5 ) |
| | | | B60J |

The present search report has been drawn up for all claims

| Place of search | Date of completion of the search | Examiner |
|---|---|---|
| THE HAGUE | 23 MARCH 1992 | FOGLIA A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)